# EUROPÄISCHE PATENTSCHRIFT

(11) **EP 4 397 954 B1**
(45) Veröffentlichungstag und Bekanntmachung des Hinweises auf die Patenterteilung: **24.06.2026**
(21) Anmeldenummer: 23150511.6
(22) Anmeldetag: 05.01.2023
(51) Int. Cl.: G01N 1/28

(54) **VERFAHREN ZUM VORBEREITEN EINER PROBENTRÄGERANORDNUNG, VERFAHREN ZUM ERZEUGEN EINES DISSEKTATES, KIT UND PROBENTRÄGERANORDNUNG**
METHOD FOR PREPARING SAMPLE HOLDER ASSEMBLY, METHOD FOR PRODUCING A DISSECTATE, KIT, AND SAMPLE HOLDER ASSEMBLY
PROCÉDÉ DE PRÉPARATION D'UN ENSEMBLE PORTE-ÉCHANTILLON, PROCÉDÉ DE GÉNÉRATION D'UN ÉCHANTILLON DE MICRODISSECTION, KIT ET ENSEMBLE PORTE-ÉCHANTILLON

(43) Veröffentlichungstag der Anmeldung: 10.07.2024
(73) Patentinhaber: Leica Microsystems CMS GmbH, 35578 Wetzlar (DE)
(72) Erfinder: Schlaudraff, Falk, 35578 Wetzlar (DE); Greb, Christoph, 35578 Wetzlar (DE)
(74) Vertreter: Schaumburg und Partner Patentanwälte mbB

(56) Entgegenhaltungen:
- WO-A1-2014/184005
- APPLICATION NOTE: "Adhesives for TEM Sample Preparation", 1 June 2020 (2020-06-01), XP093264736, Retrieved from the Internet <URL:https://www.alliedhightech.com/Media/Default/Product%20Use%20Instructions/Applications%20Note%20-%20Adhesives%20for%20TEM%20Sample%20Preparation,%20v1.0.pdf> [retrieved on 20250328]

## Beschreibung

### Technisches Gebiet

Die Erfindung betrifft ein Verfahren zum Vorbereiten einer Probenträgeranordnung für die Verwendung in einer Lasermikrodissektionsvorrichtung und ein Verfahren zum Erzeugen eines Dissektates. Die Erfindung betrifft ferner ein Kit zum Durchführen solcher Verfahren und eine Probenträgeranordnung.

### Hintergrund

Kryoelektronenmikroskopie ist eine Form der Elektronenmikroskopie mit deren Hilfe insbesondere biologische Proben untersucht werden können. Insbesondere ist mit Hilfe der Kryoelektronenmikroskopie eine hochauflösende Strukturanalyse von biologischen Molekülen, beispielsweise Proteinen, möglich. Um Proben in einem Elektronenmikroskopen beobachten zu können, werden spezielle Probenträger verwendet. Derartige Elektronenmikroskop-Probenträger bestehen aus einem Gitternetz, auch EM-Grid genannt, und einer dünnen auf dem Gitternetz angeordneten Trägerschicht, auf der die zu beobachtenden Proben aufliegen. Um einzelne Proben oder bestimmte Teile einer der Proben im Anschluss an eine elektronenmikroskopische Untersuchung biochemisch untersuchen zu können, müssen diese aus dem Elektronenmikroskop-Probenträger herausgelöst werden. Dies kann beispielsweise unter Verwendung von Lasermikrodissektion erfolgen. Die herausgelösten Probenbestandteile werden als Dissektate bezeichnet. Die Zerteilung der Proben und der darunterliegenden Trägerschicht erfolgt mit Hilfe von Laserlicht zum Erzeugen von Dissektaten. Es ist jedoch nicht ohne weiteres möglich, den Elektronenmikroskop-Probenträger in einer Lasermikrodissektionsvorrichtung zu verwenden. Die Dissektate bleiben, insbesondere aufgrund von elektrostatischer Anziehung, an dem Elektronenmikroskop-Probenträger haften, bzw. werden von diesem nach der Dissektion stark angezogen, so dass ein Transfer in ein Auffangbehältnis nicht möglich ist.

Aus Application Note: "Adhesives for TEM Sample Preparation", , 1. Juni 2020 (2020-06-01), XP093264736, ist ein Gemisch (M-Bond) aus einem Polymer (Epoxid) und einem Lösungsmittel (Phenol) für ein TEM-Gitter bekannt. Das Dokument ist abrufbar unter https://www.alliedhightech.com/Media/Default/ProductcY020Usec)/0201nstructions /ApplicationscY020Note°/020-°/020Adhesives%20for°/020TE IVP/020Sample°/020 Preparation,%20v1.0.pdf

Aufgabe der vorliegenden Erfindung ist es daher, Verfahren, ein Kit und eine Probenträgeranordnung anzugeben, die es erlauben, unter Verwendung einer Lasermikrodissektionsvorrichtung Dissektate aus einem Elektronenmikroskop-Probenträger zu gewinnen.

### Übersicht

Bei dem vorgeschlagenen Verfahren zum Vorbereiten einer Probenträgeranordnung für die Verwendung in einer Lasermikrodissektionsvorrichtung wird ein Elektronenmikroskop-Probenträger bereitgestellt wird, der ein Gitternetz und eine Trägerschicht zum Tragen einer Probe umfasst, die auf einer Seite des Gitternetzes angeordnet ist. Es wird auf der Seite des Gitternetzes, die der Trägerschicht abgewandt ist, ein Gemisch aus einem Polymer und einem Lösungsmittel aufgebracht. Ferner wird zumindest ein Teil des Lösungsmittels verdunstet, so dass das Polymer aushärtet, um die Probenträgeranordnung zu erhalten.

Das Gitternetz wird auch als Elektronenmikroskop-Grid oder EM-Grid bezeichnet. Das Gitternetz ist insbesondere rund und hat einen Durchmesser in dem Bereich von 3,00 mm bis 3,05 mm. Maschen des Gitternetzes können einen Durchmesser in dem Bereich von 0,025 µm bis 450 µm aufweisen. Das Gitternetz ist insbesondere aus einem Metall gefertigt, beispielsweise aus Kupfer, Gold, Molybdän, Nickel, Aluminium, Titan oder Edelstahl. Die Trägerschicht ist insbesondere eine dünne Schicht mit einer Dicke in dem Bereich von 300 Ä bis 500 Ä. Die Trägerschicht ist insbesondere aus amorphem Carbon oder Graphen gefertigt.

Bei dem vorgeschlagenen Verfahren wird ein möglichst dünner Film des Gemisches aus dem Polymer und dem Lösungsmittel auf die der Probe abgewandten Seite des Elektronenmikroskop-Probenträgers aufgebracht. Zumindest ein Teil des Lösungsmittels wird verdunstet, wodurch das Polymer aushärtet, sodass auf der Seite des Elektronenmikroskop-Probenträgers, die der Probe abgewandt ist, eine dünne Schicht des Polymers entsteht. Diese dünne Schicht des Polymers erhöht die Masse von Dissektaten, die beim Bearbeiten der Probenträgeranordnung mit der Lasermikrodissektionsvorrichtung erhalten werden. Hierdurch können die Dissektate die elektrostatische Anziehung zwischen dem Dissektat und der übrigen Probenträgeranordnung überwinden. Dies erleichtert es, die Dissektate von der Probenträgeranordnung beispielsweise in ein Sammelgefäß zu transportieren. Damit ermöglicht es das vorgeschlagene Verfahren, die Elektronenmikroskop-Probenträger derart vorzubereiten, dass daraus Dissektate mit der Lasermikrodissektionsvorrichtung herausgelöst werden können.

Bei einer Ausführungsform wird ein Lasermikrodissektions-Probenträger bereitgestellt, der eine Membran umfasst, die dazu ausgebildet ist, von der Lasermikrodissektionsvorrichtung geschnitten zu werden. Es wird das Gemisch auf der Membran des Lasermikrodissektions-Probenträgers aufgebracht. Es wird der Elektronenmikroskop-Probenträger derart auf der Membran des Lasermikrodissektions-Probenträgers angeordnet, dass die Membran, das Gemisch, das Gitternetz und die Trägerschicht in dieser Reihenfolge übereinander angeordnet sind. Ferner wird zumindest ein Teil des Lösungsmittels verdunstet, so dass das Polymer aushärtet, um die Probenträgeranordnung zu erhalten. Durch das Verdunsten des Lösungsmittels entsteht eine dünne Schicht des Polymers zwischen der Membran des Lasermikrodissektions-Probenträgers und dem Elektronenmikroskop-Probenträger, welche die beiden Elemente miteinander verbindet. Dissektate die beim Bearbeiten der Probenträgeranordnung mit der Lasermikrodissektionsvorrichtung erhalten werden, umfassen folglich einen Teil der Membran. Bei dieser Ausführungsform des Verfahrens wird eine Probenträgeranordnung erhalten, die den Elektronenmikroskop-Probenträger angeordnet auf dem Lasermikrodissektions-Probenträger umfasst. Die so erhaltene Probenträgeranordnung ist besonders einfach zu handhaben.

Bei einer alternativen Ausführungsform wird ein Lasermikrodissektions-Probenträger bereitgestellt wird, der eine Membran umfasst, die dazu ausgebildet ist, von der Lasermikrodissektionsvorrichtung geschnitten zu werden. Es wird eine Öffnung in der Membran erzeugt, deren Durchmesser kleiner als der Durchmesser des Elektronenmikroskop-Probenträgers ist. Ferner wird der Elektronenmikroskop-Probenträger mit dem darauf aufgebrachten und ausgehärteten Polymer derart auf der Membran angeordnet, dass die Probenträgeranordnung über der Öffnung in der Membran angeordnet ist und dass die Trägerschicht auf der der Membran abgewandten Seite des Gitternetzes angeordnet ist, um die Probenträgeranordnung zu erhalten. Die Öffnung der Membran ist vorzugsweise rund und hat einen Durchmesser von 1,0 mm bis 3,0 mm. Auch bei dieser Ausführungsform des Verfahrens wird eine Probenträgeranordnung erhalten, die den Elektronenmikroskop-Probenträger angeordnet auf dem Lasermikrodissektions-Probenträger umfasst. Allerdings ist bei dieser Ausführungsform der Elektronenmikroskop-Probenträger nicht zwangsläufig fest auf dem Lasermikrodissektions-Probenträger angeordnet. Dissektate die beim Bearbeiten der Probenträgeranordnung mit der Lasermikrodissektionsvorrichtung erhalten werden, umfassen somit keinen Teil der Membran, was für bestimmte Anwendungen von Vorteil sein kann.

Die Erfindung betrifft zudem ein Verfahren zum Erzeugen eines Dissektates, bei dem unter Verwendung des oben beschriebenen Verfahrens die Probenträgeranordnung für die Verwendung in der Lasermikrodissektionsvorrichtung vorbereitet wird. Ferner wird unter Verwendung der Lasermikrodissektionsvorrichtung aus der Probenträgeranordnung das Dissektat erzeugt, das zumindest die Probe, einen Teil der Trägerschicht und einen Teil des ausgehärteten Polymers umfasst. Das Dissektat wird insbesondere durch Schneiden der Probenträgeranordnung mit der Lasermikrodissektionsvorrichtung aus der umgebenden Probe herausgelöst. Insbesondere umfasst das Verfahren einen weiteren Verfahrensschritt, bei dem das Dissektat von dem Rest der Probenträgeranordnung entfernt wird. Das Entfernen des Dissektates erfolgt insbesondere mit Hilfe der Schwerkraft. Dabei fällt das erzeugte Dissektat beispielsweise in ein unterhalb des Probenträgeranordnung angeordnetes Sammelgefäß. Alternativ kann das Dissektat auch, beispielsweise mit Hilfe eines defokussierten Laserpulses, von der Probenträgeranordnung weg katapultiert werden. Dabei kann das Dissektat beispielsweise in Richtung der Schwerkraft in ein Sammelgefäß oder entgegen der Schwerkraft auf einen vorzugweise adhäsiven Fänger katapultiert werden.

Die vorgeschlagenen Verfahren können insbesondere auch mit den im Folgenden beschriebenen Merkmalen der auf ein Kit und eine Probenträgeranordnung gerichteten Ansprüche weitergebildet werden. Umgekehrt können auch das Kit und die Probenträgeranordnung mit Merkmalen der auf die Verfahren gerichteten Ansprüche weitergebildet werden.

Die Erfindung betrifft zudem ein Kit zum Durchführen der oben beschriebenen Verfahren. Das Kit umfasst einem Elektronenmikroskop-Probenträger, der ein Gitternetz und eine Trägerschicht zum Tragen einer Probe umfasst, die auf einer Seite des Gitternetzes angeordnet ist, und ein Gemisch aus einem Polymer und einem Lösungsmittel. Das Kit hat dieselben Vorteile wie die oben beschriebene Verfahren.

Bei einer Ausführungsform umfasst das Gemisch zwischen 20 und 90 Volumen-% des Lösungsmittels, vorzugsweise zwischen 50 und 90 Volumen-% des Lösungsmittels. Je höher der Anteil des Lösungsmittels an dem Gemisch ist, desto dünnflüssiger ist das Gemisch. Mit einem dünnflüssigeren Gemisch kann ein dünnerer Film des Gemisches auf der der Probe abgewandten Seite des Elektronenmikroskop-Probenträgers erzeugt werden. Beim Verdunsten entsteht dabei dann ein dünnerer Film des Polymers, der sich mit der Lasermikrodissektionsvorrichtung leichter schneiden lässt.

Es wurde erkannt, dass ein Anteil von zwischen 50 und 90 Volumen-% des Lösungsmittels für das Erzeugen einer gut zu schneidenden Polymerschicht optimal ist.

Bei einer weiteren Ausführungsform umfasst das Gemisch zwischen 20 und 80 Volumen-% des Polymers, vorzugsweise zwischen 20 und 50 Volumen-% des Polymers. Je höher der Anteil des Polymers an dem Gemisch ist, desto dickflüssiger ist das Gemisch. Um eine möglichst dünne und damit gut zu schneidende Polymerschicht erzeugen zu können, ist ein Anteil zwischen 20 und 50 Volumen-% des Polymers optimal.

Bei einer weiteren Ausführungsform umfasst das Gemisch mindestens einen der folgenden Stoffe als das Polymer: ein Polystyrol, ein Polyacrylat und ein Silikon. Die vorgenannten Polymere sind weitverbreitet und einfach herzustellen. Das Kit wird dadurch besonders kostengünstig. Diese Polymere eignen ferner sich besonders für die Verwendung mit biologischen Proben, da diese nicht oder nur wenig toxisch sind.

Bei einer weiteren Ausführungsform umfasst das Gemisch Xylol als das Lösungsmittel. Das Gemisch kann andere Lösungsmittel, beispielsweise Toluol, und Gemische von Lösungsmitteln umfassen. Xylol, auch Xylen, ist ein Lösungsmittel, das eine Vielzahl von Polymeren zuverlässig lösen kann. Das Kit ist damit vielseitig einsetzbar.

Das Kit umfasst einen Lasermikrodissektions-Probenträger mit einer Membran, die dazu ausgebildet ist, von einer Lasermikrodissektionsvorrichtung geschnitten zu werden. Die Membran besteht insbesondere aus Polyethylen-Naphthalat (PEN), Polyethylen-Tetraphylat (PET), Polyphenylene-Sulfit (PPS), Polyester (POL) oder PolyEtherimid (PEI). Diese Ausführungsform des Kits erlaubt es einem Benutzer, die Probenträgeranordnung auf dem Lasermikrodissektions-Probenträger vorzubereiten, wodurch die Probenträgeranordnung besonders einfach zu handhaben ist.

Bei einer weiteren Ausführungsform umfasst der Lasermikrodissektions-Probenträger einen Rahmen mit einer durch den Rahmen durchgehenden Öffnung. Die Membran ist in der Öffnung des Rahmens angeordnet. Der Rahmen kann insbesondere aus einem Metall oder einem Plastik gefertigt sein und ist insbesondere einstückig ausgeführt. Bei dieser Ausführungsform ist die Membran in den Rahmen beispielsweise eingespannt oder auf den Rahmen derart aufgeklebt, dass die Membran die Öffnung des Rahmens überspannt. An dem Rahmen kann der Benutzer den Lasermikrodissektions-Probenträger und damit die Probenträgeranordnung greifen, ohne die Membran zu beschädigen. Die unter Verwendung des Kits gemäß dieser Ausführungsform vorbereitete Probenträgeranordnung ist dadurch besonders einfach zu handhaben.

Bei einer Alternativen Ausführungsform umfasst der Lasermikrodissektions-Probenträger eine Trägerplatte, insbesondere eine Trägerplatte aus Glas. In der Trägerplatte ist eine Vertiefung angeordnet. Die Membran überspannt die Vertiefung in der Trägerplatte, so dass zwischen der Trägerplatte und der Membran ein Zwischenraum gebildet ist.

Die Membran weist eine Öffnung auf, deren Durchmesser kleiner als der Durchmesser des Elektronenmikroskop-Probenträgers ist. Die Öffnung erlaubt es dem Benutzer, die Probenträgeranordnung so vorzubereiten, dass beim Bearbeiten mit der Lasermikrodissektionsvorrichtung ein Dissektat entsteht, das keinen Teil der Membran umfasst.

Alternativ kann neben den ausgeschnittenen Membranen auch ein vorgefertigter Halterahmen mit einer Öffnung, die kleiner als der Durchmesser des Elektronenmikroskop-Probenträgers ist, verwendet werden.

Die Erfindung betrifft ferner eine Probenträgeranordnung für die Verwendung in einer Lasermikrodissektionsvorrichtung mit einem Elektronenmikroskop-Probenträger, der ein Gitternetz und eine dünne Trägerschicht zum Tragen einer Probe umfasst, die auf einer Seite des Gitternetzes angeordnet ist. Auf der Seite des Gitternetzes, die der Trägerschicht abgewandt ist, ist ein Gemisch aus einem Polymer und einem Lösungsmittel aufgebracht. Die Probenträgeranordnung hat dieselben Vorteile wie das oben beschriebene Verfahren und das oben beschriebene Kit und kann insbesondere mit den Merkmalen der auf das Kit gerichteten Ansprüche weitergebildet werden. Umgekehrt kann auch das Kit mit den Merkmalen der auf die Probenträgeranordnung gerichteten Ansprüche weitergebildet werden.

Bei einer Ausführungsform umfasst die Probenträgeranordnung eine Membran, die dazu ausgebildet ist, von einer Lasermikrodissektionsvorrichtung geschnitten zu werden, wobei das Gemisch zwischen dem Gitternetz und der Membran angeordnet ist. Die Probenträgeranordnung kann ferner einen Lasermikrodissektions-Probenträger umfassen, der die Membran umfasst. Bei einer solchen Ausführungsform ist der Elektronenmikroskop-Probenträger auf der Membran des Lasermikrodissektions-Probenträger angeordnet. Der Benutzer kann die Probenträgeranordnung dadurch leicht handhaben. Insbesondere kann ein Teil des Lösungsmittels ist verdunstet sein, so dass das Polymer ausgehärtet ist und eine Schicht des Polymers zwischen dem Elektronenmikroskop-Probenträger und der Membran gebildet ist. Eine solche Schicht verbindet den Elektronenmikroskop-Probenträger und die Membran.

Bei einer Ausführungsform umfasst die Probenträgeranordnung einen Lasermikrodissektions-Probenträger mit einer Membran, die dazu ausgebildet ist, von einer Lasermikrodissektionsvorrichtung geschnitten zu werden. Die Membran weist eine Öffnung auf, deren Durchmesser kleiner ist als der Durchmesser des Elektronenmikroskop-Probenträgers. Der Elektronenmikroskop-Probenträger ist derart auf der Öffnung der Membran angeordnet, dass das Gemisch auf der der Membran zugewandten Seite des Gitternetzes angeordnet ist und die Trägerschicht auf der der Membran abgewandten Seite des Gitternetzes angeordnet ist. Zumindest ein Teil des Lösungsmittels ist verdunstet, so dass das Polymer ausgehärtet ist. Der Probenträger nach dieser Ausführungsform kann mit der Lasermikrodissektionsvorrichtung bearbeitet werden, so dass ein Dissektat entsteht, das keinen Teil der Membran umfasst.

Weitere Merkmale und Vorteile ergeben sich aus der folgenden Beschreibung, welche in Verbindung mit den beigefügten Figuren Ausführungsbeispiele näher erläutert.

### Kurzbeschreibung der Figuren

Es zeigen:
- Figur 1: eine Probenträgeranordnung für die Verwendung in einer Lasermikrodissektionsvorrichtung gemäß einem Ausführungsbeispiel;
- Figur 2: einen Schnitt durch die Probenträgeranordnung nach Figur 1;
- Figur 3: ein Dissektat, das aus der Probenträgeranordnung nach den Figuren 1 und 2 erhalten wurde;
- Figuren 4a bis 4c: jeweils einen Verfahrensschritt eines Verfahrens zum Vorbereiten der Probenträgeranordnung nach den Figuren 1 und 2 für die Verwendung in der Lasermikrodissektionsvorrichtung;
- Figur 5: einen Schnitt durch einer Probenträgeranordnung gemäß einem weiteren Ausführungsbeispiel;
- Figur 6: ein Dissektat, das aus der Probenträgeranordnung nach Figur 5 erhalten wurde;
- Figuren 7a bis 7c: jeweils einen Verfahrensschritt eines zum Vorbereiten der Probenträgeranordnung nach Figur 5 für die Verwendung in der Lasermikrodissektionsvorrichtung; und
- Figur 8: einen Schnitt durch die Probenträgeranordnung nach dem Stand der Technik.

### Beschreibung

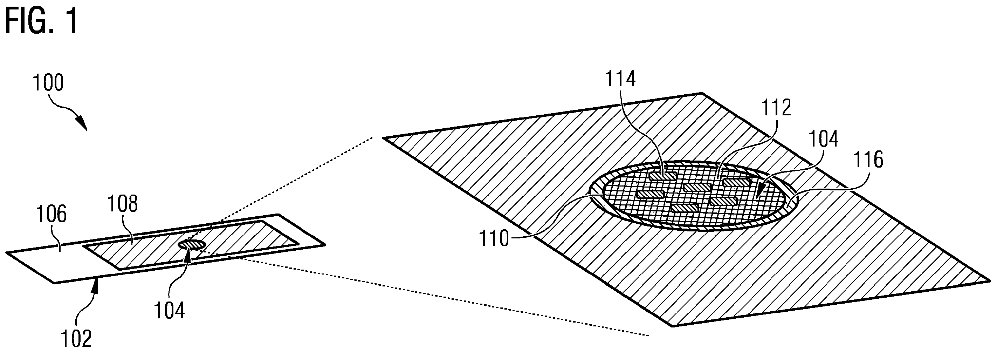

Figur 1 zeigt in schematischer perspektivischer Darstellung eine Probenträgeranordnung 100 für die Verwendung in einer Lasermikrodissektionsvorrichtung gemäß einem Ausführungsbeispiel.

Die Probenträgeranordnung 100 umfasst einen Lasermikrodissektions-Probenträger 102 und einen Elektronenmikroskop-Probenträger 104, der auf dem Lasermikrodissektions-Probenträger 102 angeordnet ist. Eine Detailansicht in Figur 1 zeigt einen Bereich des Lasermikrodissektions-Probenträgers 102 auf dem der Elektronenmikroskop-Probenträger 104 angeordnet ist.

Der Lasermikrodissektions-Probenträger 102 umfasst einen Rahmen 106 und eine Membran 108. Der Rahmen 106 ist rein beispielhaft aus einem Metall gefertigt und hat eine durch den Rahmen 106 durchgehende Öffnung, in der die Membran 108 angeordnet ist. Die Membran 108 kann beispielsweise in den Rahmen 106 eingespannt sein oder derart auf den Rahmen 106 aufgeklebt sein, dass die Membran 108 die Öffnung des Rahmens 106 vollständig überspannt. Die Membran 108 ist insbesondere eine Membran 108 aus PEN und dazu ausgebildet, mit der Lasermikrodissektionsvorrichtung geschnitten zu werden.

Der Elektronenmikroskop-Probenträger 104 umfasst ein Gitternetz 110, auch EM-Grid oder TEM-Grid genannt, und eine Trägerschicht 112 zum Tragen von Proben 114, die auf dem Gitternetz 110 angeordnet ist. Das Gitternetz 110 besteht vorzugsweise aus einem Metall und hat typischerweise einen Durchmesser von 3,00 mm oder 3,05 mm. Die Maschengröße des Gitternetzes 110 ist so gewählt, dass der Elektronenstrahl eines Transmissionselektronenmikroskops das Gitternetz 110 ohne störende Interferenz passieren können. Typischerweise wird die Maschengröße in der Maßeinheit Mesh angegeben, welche die Anzahl Löcher pro Quadratzoll angibt. Typische Elektronenmikroskop-Probenträger 104 weisen 50 bis 600 Mesh auf, was in etwa einem Maschendurchmesser in dem Bereich von 0,025 µm bis 450 µm entspricht. Die Trägerschicht 112 ist eine dünne Schicht mit einer Dicke in dem Bereich von 300 Ä bis 500 Å, welche verhindert, dass die Proben 114 durch die Maschen des Gitternetzes 110 fallen. Die Trägerschicht 112 ist insbesondere aus Kohlenstoff, beispielsweise amorphem Carbon oder Graphen gefertigt.

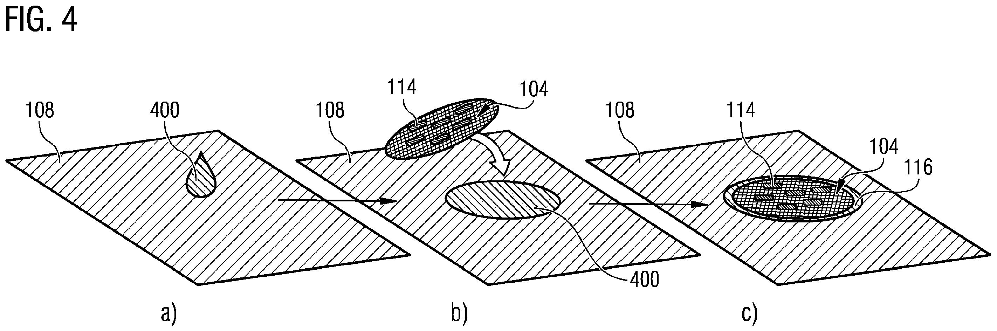

Zwischen dem Lasermikrodissektions-Probenträger 102 und dem Elektronenmikroskop-Probenträger 104 ist eine Schicht 116 eines Polymers angeordnet. Die Polymerschicht 116 verbindet den Elektronenmikroskop-Probenträger 104 mit der Membran 108 des Lasermikrodissektions-Probenträgers 102. Um die Polymerschicht 116 zu erhalten, wurde ein Gemisch 400 (vgl. Figur 4) aus dem Polymer und einem Lösungsmittel zwischen der Membran 108 und dem Elektronenmikroskop-Probenträgers 104 eingebracht. Es wurde ferner zumindest ein Teil des Lösungsmittels verdunstet, um die Polymerschicht 116 zu erhalten. Dieses Verfahren zum Vorbereiten der Probenträgeranordnung 100 für die Verwendung in der Lasermikrodissektionsvorrichtung ist im Folgenden anhand der Figuren 4a bis 4c noch näher beschrieben.

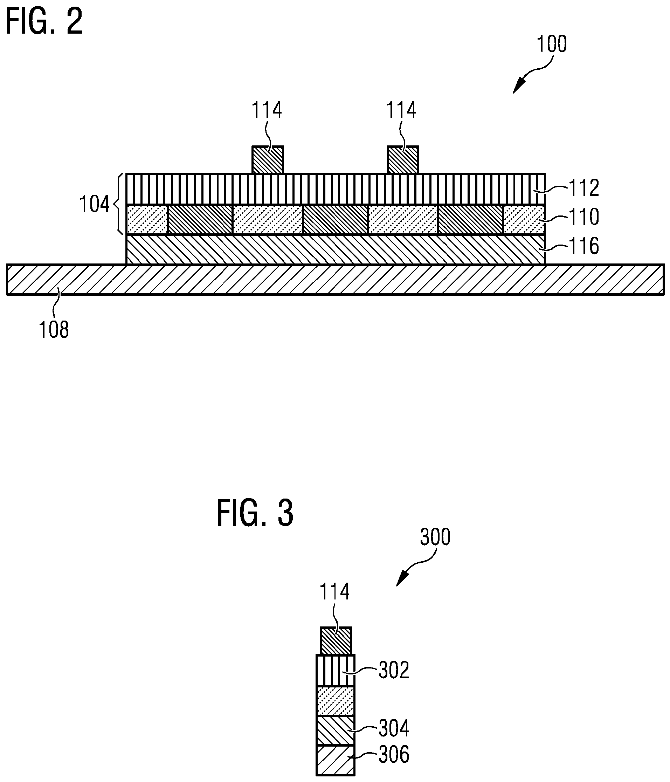

Figur 2 zeigt in schematischer Darstellung einen Schnitt durch die Probenträgeranordnung 100 nach Figur 1.

Die Probenträgeranordnung 100 umfasst mehrere Schichten, die übereinander angeordnet sind. Die Dicke der gezeigten Schichten ist nicht maßstabsgetreu. Die unterste Schicht wird durch die Membran 108 des Lasermikrodissektions-Probenträgers 102 gebildet. Darüber ist die Polymerschicht 116 angeordnet. Über der Polymerschicht 116 ist das Gitternetz 110 angeordnet. Auf dem Gitternetz 110 ist schließlich die Trägerschicht 112 angeordnet, welche die Proben 114 trägt.

Um aus der Probenträgeranordnung 100 ein Dissektat 300 (vgl. Figur 3) zu erhalten, wird die Probenträgeranordnung 100 mit der Lasermikrodissektionsvorrichtung bearbeitet. Insbesondere wird eine der Proben 114 unter Verwendung eines fokussierten Laserstrahls aus der Probenträgeranordnung 100 herausgeschnitten. Alternativ kann das Dissektat 300 auch durch Herausreißen erhalten werden. Das so erhaltene Dissektat 300 wird dann von dem Rest der Probenträgeranordnung 100 getrennt. Beispielsweise fällt das Dissektat 300 aufgrund der Schwerkraft in ein unter der Probenträgeranordnung 100 angeordnetes Sammelgefäß. Alternativ kann das Dissektat 300 auch mit Hilfe eines defokussierten Laserstrahls von dem Rest der Probenträgeranordnung 100 wegkatapultiert werden. Ein beispielhaftes Dissektat 300 ist anhand der Figur 3 beschrieben.

Figur 3 zeigt in schematischer Darstellung ein Dissektat 300, das aus der Probenträgeranordnung 100 nach den Figuren 1 und 2 erhalten wurde.

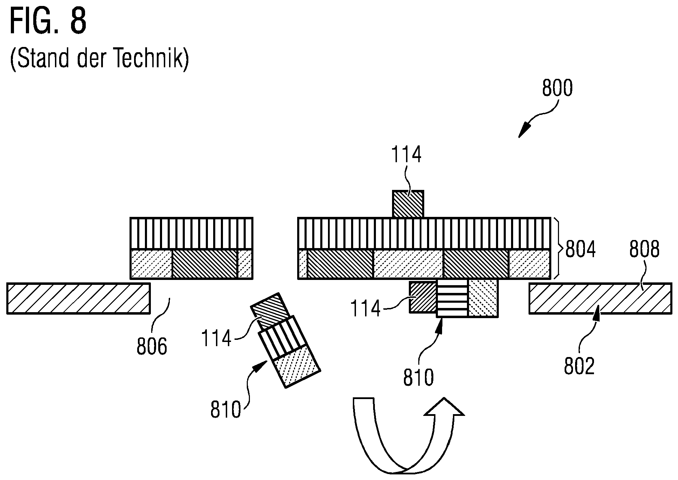

Das Dissektat 300 umfasst eine der Proben 114, einen Teil 302 der Trägerschicht 112, einen Teil 304 der Polymerschicht 116 und einen Teil 306 der Membran 108. Der Teil 302 der Polymerschicht 116 erhöht die Masse des Dissektates 300 gegenüber einen Dissektat ohne die Polymerschicht 116. Hierdurch kann das Dissektat 300 die elektrostatische Anziehung zwischen dem Dissektat 300 und dem Rest der Probenträgeranordnung 100 überwinden und von dem Rest der Probenträgeranordnung 100 getrennt werden. Die elektrostatische Anziehung zwischen einem Dissektat, beispielsweise einem Partikel, einem Proteinkonglomerat, einer Einzelzelle oder einem Bakterium und dem Rest einer bekannten Probenträgeranordnung 800 ist anhand der Figur 8 im Folgenden noch näher beschrieben.

Die Figuren 4a bis 4c illustrieren das Verfahren zum Vorbereiten der Probenträgeranordnung 100 für die Verwendung in der Lasermikrodissektionsvorrichtung.

Bei dem anhand der Figuren 4a bis 4c beschriebenen Verfahren wird ein Probenträger nach den Figuren 1 und 2 erhalten. Als erster Verfahrensschritt werden der Elektronenmikroskop-Probenträger 104 und der Lasermikrodissektions-Probenträger 102 bereitgestellt. Es wird ferner das Gemisch 400 aus dem Polymer und dem Lösungsmittel bereitgestellt. Das Gemisch 400 umfasst beispielsweise 20 Volumen-% des Polymers und 80 Volumen-% des Lösungsmittels. Das Polymer ist rein beispielhaft Polystyrol und das Lösungsmittel ist rein beispielhaft Xylol.

In dem anhand der Figur 4a illustrierten Verfahrensschritt wird das Gemisch 400 auf die Membran 108 des Lasermikrodissektions-Probenträgers 102 aufgebracht. Vorzugsweise wird das Gemisch 400 mittig auf der Membran 108 aufgebracht. In dem anhand der Figur 4b illustrierten Verfahrensschritt wird nun der Elektronenmikroskop-Probenträger 104 mit den Proben 114 derart auf der Membran 108 aufgebracht, dass das Gemisch 400 zwischen der Membran 108 und dem Elektronenmikroskop-Probenträger 104 angeordnet ist und dass die Proben 114 auf der von der Membran 108 abgewandten Seite des Elektronenmikroskop-Probenträgers 104 angeordnet sind. In dem letzten Verfahrensschritt, der anhand der Figur 4c illustriert ist, wird zumindest ein Teil des Lösungsmittels verdunstet. Dabei härtet das Polymer aus, wodurch die die Polymerschicht 116 zwischen der Membran 108 und dem Elektronenmikroskop-Probenträger 104 entsteht.

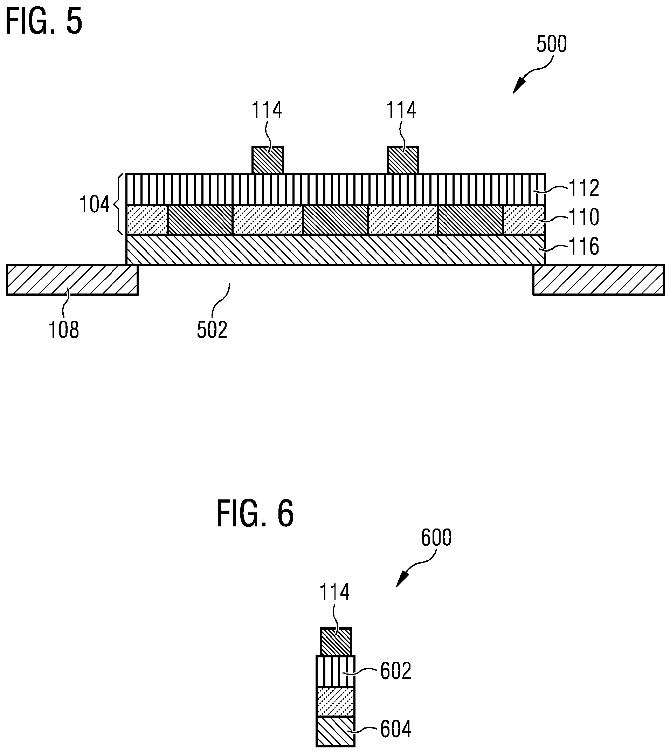

Figur 5 zeigt in schematischer Darstellung einen Schnitt durch einer Probenträgeranordnung 500 gemäß einem weiteren Ausführungsbeispiel.

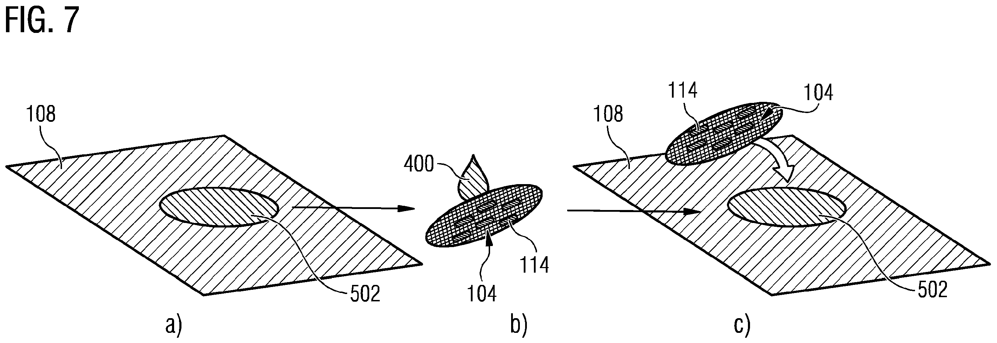

Die Probenträgeranordnung 500 gemäß der Figur 5 unterscheidet sich von der Probenträgeranordnung 500 gemäß der Figuren 1 und 2 darin, dass die Membran 108 des Lasermikrodissektions-Probenträgers 102 eine Öffnung 502 aufweist. Der Durchmesser der Öffnung 502 ist kleiner als der Durchmesser des Elektronenmikroskop-Probenträgers 104. Der Elektronenmikroskop-Probenträger 104 ist derart über der Öffnung 502 angeordnet, dass die Proben 114 auf der von der Öffnung 502 abgewandten Seite des Elektronenmikroskop-Probenträgers 104 angeordnet sind. Beim Bearbeiten der Probenträgeranordnung 500 mit der Lasermikrodissektionsvorrichtung wird ein Dissektat 600 erhalten, dass keinen Teil der Membran 108 umfasst. Ein beispielhaftes Dissektat 600 ist im Folgenden anhand der Figur 6 beschrieben. Ein Verfahren zum Vorbereiten der Probenträgeranordnung 500 für die Verwendung in der Lasermikrodissektionsvorrichtung ist im Folgenden anhand der Figuren 7a bis 7d noch näher beschrieben.

Figur 6 zeigt in schematischer Darstellung ein Dissektat 600, das aus der Probenträgeranordnung 500 nach Figur 5 erhalten wurde.

Das Dissektat 600 umfasst eine der Proben 114, einen Teil 602 der Trägerschicht 112 und einen Teil 604 der Polymerschicht 116. Anders als das anhand der Figur 3 beschriebene Dissektat 300, umfasst das in Figur 5 gezeigte Dissektat 500 nicht den Teil 306 der Membran 108. Auch bei diesem Dissektat 300 erhöht der Teil 604 der Polymerschicht 116 die Masse des Dissektates 600 und das Dissektat 600 kann die elektrostatische Anziehung zwischen dem Dissektat 600 und dem Rest der Probenträgeranordnung 500 überwinden, um von dem Rest der Probenträgeranordnung 500 getrennt werden zu können.

Die Figuren 7a bis 7c illustrieren das Verfahren zum Vorbereiten der Probenträgeranordnung 500 für die Verwendung in der Lasermikrodissektionsvorrichtung.

Bei dem anhand der Figuren 7a bis 7c beschriebenen Verfahren wird ein Probenträger gemäß Figur 5 erhalten. Als erster Verfahrensschritt werden der Elektronenmikroskop-Probenträger 104 und der Lasermikrodissektions-Probenträger 102 bereitgestellt.

In dem anhand der Figur 7a illustrierten Verfahrensschritt wird die Öffnung 502 in der Membran 108 erzeugt. Dies kann beispielsweise mit Hilfe der Lasermikrodissektionsvorrichtung erfolgen. Der Durchmesser der Öffnung 502 muss kleiner sein als der Durchmesser des Elektronenmikroskop-Probenträgers 104. Wenn der Durchmesser des Elektronenmikroskop-Probenträgers 104 3,00 mm beträgt, hat die Öffnung 502 vorzugsweise einen Durchmesser von 1,0 mm bis 2,90 mm. Wenn der Durchmesser des Elektronenmikroskop-Probenträgers 104 3,05 mm beträgt, hat die Öffnung 502 vorzugsweise einen Durchmesser von 1,0 mm bis 3,00 mm. In dem anhand der Figur 7b illustrierten Verfahrensschritt wird das Gemisch 400 auf die von den Proben 114 abgewandte Seite des Elektronenmikroskop-Probenträgers 104 aufgebracht. Es wird ferner zumindest ein Teil des Lösungsmittels verdunstet, um das Polymer auszuhärten und die Polymerschicht 116 zu erhalten. Der Elektronenmikroskop-Probenträger 104 mit der Polymerschicht 116 wird dann in dem letzten Verfahrensschritt auf der Öffnung 502 des Lasermikrodissektions-Probenträgers 102 angeordnet, um die Probenträgeranordnung 500 zu erhalten. Der letzte Verfahrensschritt ist anhand der Figur 7c illustriert.

Figur 8 zeigt in schematischer Darstellung einen Schnitt durch die Probenträgeranordnung 800 nach dem Stand der Technik.

Die bekannte Probenträgeranordnung 800 besteht aus einem Elektronenmikroskop-Probenträger 804, der auf einer Membran 808 eines Lasermikrodissektions-Probenträgers 802 angeordnet ist. Der Elektronenmikroskop-Probenträger 804 ist über einer Öffnung 806 in der Membran 808 angeordnet. Aus dem Elektronenmikroskop-Probenträger 804 geschnittene Dissektate 810 fallen zunächst aus dem Elektronenmikroskop-Probenträger 804 heraus. Die elektrostatische Anziehung zwischen den Dissektaten 810 und dem Rest des Elektronenmikroskop-Probenträgers 804 sorgt allerdings dafür, dass die Dissektate 810 an der Unterseite des Elektronenmikroskop-Probenträgers 804 haften bleiben.

Der Begriff "und/oder" umfasst alle Kombinationen von einem oder mehreren der zugehörigen aufgeführten Elemente und kann mit "/" abgekürzt werden.

Obwohl einige Aspekte im Rahmen einer Vorrichtung beschrieben wurden, ist es klar, dass diese Aspekte auch eine Beschreibung des entsprechenden Verfahrens darstellen, wobei ein Block oder eine Vorrichtung einem Verfahrensschritt oder einer Funktion eines Verfahrensschritts entspricht. Analog dazu stellen Aspekte, die im Rahmen eines Verfahrensschritts beschrieben werden, auch eine Beschreibung eines entsprechenden Blocks oder Elements oder einer Eigenschaft einer entsprechenden Vorrichtung dar.

### Bezugszeichenliste

- 100: Probenträgeranordnung
- 102: Lasermikrodissektions-Probenträger
- 104: Elektronenmikroskop-Probenträger
- 106: Rahmen
- 108: Membran
- 110: Gitternetz
- 112: Trägerschicht
- 114: Proben
- 116: Polymerschicht
- 300: Dissektat
- 302, 304, 306: Teil
- 400: Gemisch
- 500: Probenträgeranordnung
- 502: Öffnung
- 602, 604: Teil
- 800: Probenträgeranordnung
- 802: Lasermikrodissektions-Probenträger
- 804: Elektronenmikroskop-Probenträger
- 806: Öffnung
- 808: Membran
- 810: Dissektat

## Patentansprüche

1. Verfahren zum Vorbereiten einer Probenträgeranordnung (100, 500) für die Verwendung in einer Lasermikrodissektionsvorrichtung, bei dem
ein Elektronenmikroskop-Probenträger (104) bereitgestellt wird, der ein Gitternetz (110) und eine Trägerschicht (112) zum Tragen einer Probe (114) umfasst, die auf einer Seite des Gitternetzes (110) angeordnet ist;
auf der Seite des Gitternetzes (110), die der Trägerschicht (112) abgewandt ist, ein Gemisch (400) aus einem Polymer und einem Lösungsmittel aufgebracht wird; und
zumindest ein Teil des Lösungsmittels verdunstet wird, so dass das Polymer aushärtet, um die Probenträgeranordnung (100, 500) zu erhalten.

2. Verfahren nach Anspruch 1, bei dem
ein Lasermikrodissektions-Probenträger (102) bereitgestellt wird, der eine Membran (108) umfasst, die dazu ausgebildet ist, von der Lasermikrodissektionsvorrichtung geschnitten zu werden;
das Gemisch (400) auf der Membran (108) des Lasermikrodissektions-Probenträgers (102) aufgebracht wird;
der Elektronenmikroskop-Probenträger (104) derart auf der Membran (108) des Lasermikrodissektions-Probenträgers (102) angeordnet wird, dass die Membran (108), das Gemisch (400), das Gitternetz (110) und die Trägerschicht (112) in dieser Reihenfolge übereinander angeordnet sind; und
zumindest ein Teil des Lösungsmittels verdunstet wird, so dass das Polymer aushärtet, um die Probenträgeranordnung (100) zu erhalten.

3. Verfahren nach Anspruch 1, bei dem
ein Lasermikrodissektions-Probenträger (102) bereitgestellt wird, der eine Membran (108) umfasst, die dazu ausgebildet ist, von der Lasermikrodissektionsvorrichtung geschnitten zu werden;
eine Öffnung in der Membran (108) erzeugt wird, deren Durchmesser kleiner als der Durchmesser des Elektronenmikroskop-Probenträgers (104) ist; und
der Elektronenmikroskop-Probenträger (104) mit dem darauf aufgebrachten und ausgehärteten Polymer derart auf der Membran (108) angeordnet wird, dass die Probenträgeranordnung (100, 500) über der Öffnung in der Membran (108) angeordnet ist und dass die Trägerschicht (112) auf der der Membran (108) abgewandten Seite des Gitternetzes (110) angeordnet ist, um die Probenträgeranordnung (500) zu erhalten.

4. Verfahren zum Erzeugen eines Dissektates (300), bei dem unter Verwendung des Verfahrens nach einem der Ansprüche 1 bis 3 die Probenträgeranordnung (100, 500) für die Verwendung in der Lasermikrodissektionsvorrichtung vorbereitet wird; und bei dem unter Verwendung der Lasermikrodissektionsvorrichtung aus der Probenträgeranordnung (100, 500) das Dissektat (300) erzeugt wird, das zumindest die Probe (114), einen Teil (302, 602) der Trägerschicht (112) und einen Teil (306, 604) des ausgehärteten Polymers umfasst.

5. Kit zum Durchführen eines Verfahrens nach einem der Ansprüche 1 bis 4, mit
einem Elektronenmikroskop-Probenträger (104), der ein Gitternetz (110) und eine Trägerschicht (112) zum Tragen einer Probe (114) umfasst, die auf einer Seite des Gitternetzes (110) angeordnet ist;
einen Lasermikrodissektions-Probenträger (102) mit einer Membran (108), die dazu ausgebildet ist, von einer Lasermikrodissektionsvorrichtung geschnitten zu werden, wobei die Membran (108) eine Öffnung (502) aufweist, deren Durchmesser kleiner als der Durchmesser des Elektronenmikroskop-Probenträgers (104) ist; und
einem Gemisch (400) aus einem Polymer und einem Lösungsmittel.

6. Kit nach Anspruch 5, wobei das Gemisch (400) zwischen 20 und 90 Volumen-% des Lösungsmittels, vorzugsweise zwischen 50 und 90 Volumen-% des Lösungsmittels, umfasst.

7. Kit nach Anspruch 5 oder 6, wobei das Gemisch (400) zwischen 20 und 80 Volumen-% des Polymers, vorzugsweise zwischen 20 und 50 Volumen-% des Polymers, umfasst.

8. Kit nach einem der Ansprüche 5 bis 7, wobei das Gemisch (400) mindestens einen der folgenden Stoffe als das Polymer umfasst: ein Polystyrol, ein Polyacrylat und ein Silikon.

9. Kit nach einem der Ansprüche 5 bis 8, wobei das Gemisch (400) Xylol als das Lösungsmittel umfasst.

10. Kit nach einem der Ansprüche 5 bis 9, wobei der Lasermikrodissektions-Probenträger (102) einen Rahmen (106) mit einer durch den Rahmen (106) durchgehenden Öffnung umfasst und die Membran (108) in der Öffnung des Rahmens (106) angeordnet ist.

11. Probenträgeranordnung (100, 500) für die Verwendung in einer Lasermikrodissektionsvorrichtung, mit einem Elektronenmikroskop-Probenträger (104), der ein Gitternetz (110) und eine dünne Trägerschicht (112) zum Tragen einer Probe (114) umfasst, die auf einer Seite des Gitternetzes (110) angeordnet ist, wobei auf der Seite des Gitternetzes (110), die der Trägerschicht (112) abgewandt ist, ein Gemisch (400) aus einem Polymer und einem Lösungsmittel aufgebracht ist.

12. Probenträgeranordnung (100) nach Anspruch 11, umfassend eine Membran (108), die dazu ausgebildet ist, von einer Lasermikrodissektionsvorrichtung geschnitten zu werden, wobei das Gemisch (400) zwischen dem Gitternetz (110) und der Membran (108) angeordnet ist.

13. Probenträgeranordnung (500) nach Anspruch 11, umfassend einen Lasermikrodissektions-Probenträger (102) mit einer Membran (108), die dazu ausgebildet ist, von einer Lasermikrodissektionsvorrichtung geschnitten zu werden; wobei die Membran (108) eine Öffnung aufweist, deren Durchmesser kleiner ist als der Durchmesser des Elektronenmikroskop-Probenträgers (104); wobei der Elektronenmikroskop-Probenträger (104) derart auf der Öffnung der Membran (108) angeordnet ist, dass das Gemisch (400) auf der der Membran (108) zugewandten Seite des Gitternetzes (110) angeordnet ist und die Trägerschicht (112) auf der der Membran (108) abgewandten Seite des Gitternetzes (110) angeordnet ist; und wobei zumindest ein Teil des Lösungsmittels verdunstet ist, so dass das Polymer ausgehärtet ist.

## Claims

1. Method for preparing a sample holder assembly (100, 500) for use in a laser microdissection device, wherein
an electron microscope sample carrier (104) is provided, which comprises a grid (110) and a support layer (112) for carrying a sample (114), which is disposed on one side of the grid (110);
on the side of the grid (110) that is facing away from the support layer (112), a mixture (400) of a polymer and a solvent is applied; and
at least part of the solvent is evaporated, so that the polymer cures, in order to obtain the sample holder assembly (100, 500).

2. Method according to claim 1, wherein
a laser microdissection sample carrier (102) is provided, which comprises a membrane (108), which is configured to be cut by the laser microdissection device;
the mixture (400) is applied to the membrane (108) of the laser microdissection sample carrier (102);
the electron microscope sample carrier (104) is disposed on the membrane (108) of the laser microdissection sample carrier (102) in such a way that the membrane (108), the mixture (400), the grid (110) and the support layer (112) are disposed one above the other in this order; and
at least part of the solvent is evaporated, so that the polymer cures, in order to obtain the sample holder assembly (100).

3. Method according to claim 1, wherein
a laser microdissection sample carrier (102) is provided, which comprises a membrane (108), which is configured to be cut by the laser microdissection device;
an opening is produced in the membrane (108), the diameter of which is smaller than the diameter of the electron microscope sample carrier (104); and
the electron microscope sample carrier (104) with the polymer applied and cured thereon is disposed on the membrane (108) in such a way that the sample holder assembly (100, 500) is disposed above the opening in the membrane (108) and that the support layer (112) is disposed on the side of the grid (110) facing away from the membrane (108), in order to obtain the sample holder assembly (500).

4. Method for producing a dissectate (300), wherein, using the method according to one of claims 1 to 3, the sample holder assembly (100, 500) is prepared for use in the laser microdissection device; and wherein, using the laser microdissection device, the dissectate (300), which comprises at least the sample (114), a part (302, 602) of the support layer (112) and a part (306, 604) of the cured polymer, is produced from the sample holder assembly (100, 500).

5. Kit for carrying out a method according to one of claims 1 to 4, with an electron microscope sample carrier (104), which comprises a grid (110) and a support layer (112) for carrying a sample (114), which is disposed on one side of the grid (110);
a laser microdissection sample carrier (102) with a membrane (108), which is configured to be cut by a laser microdissection device, wherein the membrane (108) has an opening (502), the diameter of which is smaller than the diameter of the electron microscope sample carrier (104); and
a mixture (400) of a polymer and a solvent.

6. A kit according to claim 5, wherein the mixture (400) comprises between 20 and 90 volume-% of the solvent, preferably between 50 and 90 volume-% of the solvent.

7. Kit according to claim 5 or 6, wherein the mixture (400) comprises between 20 and 80 volume-% of the polymer, preferably between 20 and 50 volume-% of the polymer.

8. Kit according to one of claims 5 to 7, wherein the mixture (400) comprises at least one of the following substances as the polymer: a polystyrene, a polyacrylate and a silicone.

9. Kit according to one of claims 5 to 8, wherein the mixture (400) comprises xylene as the solvent.

10. Kit according to one of claims 5 to 9, wherein the laser microdissection sample carrier (102) comprises a frame (106) with an opening extending through the frame (106) and the membrane (108) is disposed in the opening of the frame (106).

11. sample holder assembly (100, 500) for use in a laser microdissection device, with an electron microscope sample carrier (104), which comprises a grid (110) and a thin support layer (112) for carrying a sample (114), which is disposed on one side of the grid (110), wherein a mixture (400) of a polymer and a solvent is applied on the side of the grid (110) facing away from the support layer (112).

12. sample holder assembly (100) according to claim 11, comprising a membrane (108), which is configured to be cut by a laser microdissection device, wherein the mixture (400) is disposed between the grid (110) and the membrane (108).

13. sample holder assembly (500) according to claim 11, comprising a laser microdissection sample carrier (102) with a membrane (108), which is configured to be cut by a laser microdissection device; wherein the membrane (108) has an opening, the diameter of which is smaller than the diameter of the electron microscope sample carrier (104); wherein the electron microscope sample carrier (104) is disposed on the opening of the membrane (108) in such a way that the mixture (400) is disposed on the side of the grid (110) facing the membrane (108) and the support layer (112) is disposed on the side of the grid (110) facing away from the membrane (108); and wherein at least part of the solvent has evaporated, so that the polymer has cured.

## Revendications

1. Procédé de préparation d'un ensemble porte-échantillon (100, 500) pour l'utilisation dans un dispositif de microdissection laser, dans lequel
un porte-échantillon de microscopie électronique (104) est fourni, qui comprend un treillis (110) et une couche support (112) pour porter un échantillon (114), l'échantillon étant disposé sur un côté du treillis (110) ;
sur le côté du treillis (110) qui est opposé à la couche support (112), un mélange (400) d'un polymère et d'un solvant est appliqué ; et
au moins une partie du solvant s'évapore, de sorte que le polymère durcit, afin d'obtenir l'ensemble porte-échantillon (100, 500).

2. Procédé selon la revendication 1, dans lequel
un porte-échantillon de microdissection laser (102) est fourni, qui comprend une membrane (108) configurée pour être coupée par le dispositif de microdissection laser ;
le mélange (400) est appliqué sur la membrane (108) du porte-échantillon de microdissection laser (102) ;
le porte-échantillon de microscopie électronique (104) est disposé sur la membrane (108) du porte-échantillon de microdissection laser (102) de telle sorte que la membrane (108), le mélange (400), le treillis (110) et la couche support (112) soient disposés les uns au-dessus des autres dans cet ordre ; et
au moins une partie du solvant s'évapore, de sorte que le polymère durcit, afin d'obtenir l'ensemble porte-échantillon (100).

3. Procédé selon la revendication 1, dans lequel
un porte-échantillon de microdissection laser (102) est fourni, qui comprend une membrane (108) configurée pour être coupée par le dispositif de microdissection laser ;
une ouverture dans la membrane (108) est créée, dont le diamètre est inférieur au diamètre du porte-échantillon de microscopie électronique (104) ; et
le porte-échantillon de microscopie électronique (104) avec le polymère appliqué sur celui-ci et durci est disposé sur la membrane (108) de telle sorte que l'ensemble porte-échantillon (100, 500) soit disposé au-dessus de l'ouverture dans la membrane (108) et que la couche support (112) soit disposée sur le côté du treillis (110) opposé à la membrane (108), afin d'obtenir l'ensemble porte-échantillon (500).

4. Procédé de génération d'un échantillon de microdissection (300), dans lequel, en utilisant le procédé selon l'une des revendications 1 à 3, l'ensemble porte-échantillon (100, 500) est préparé pour l'utilisation dans le dispositif de microdissection laser ; et
dans lequel, en utilisant le dispositif de microdissection laser, l'échantillon de microdissection (300) est généré à partir de l'ensemble porte-échantillon (100, 500), l'échantillon de microdissection comprenant au moins l'échantillon (114), une partie (302, 602) de la couche support (112) et une partie (306, 604) du polymère durci.

5. Kit pour mettre en œuvre un procédé selon l'une des revendications 1 à 4, avec un porte-échantillon de microscopie électronique (104), qui comprend un treillis (110) et une couche support (112) pour porter un échantillon (114), l'échantillon étant disposé sur un côté du treillis (110) ;
un porte-échantillon de microdissection laser (102) avec une membrane (108), configurée pour être coupée par un dispositif de microdissection laser, dans lequel la membrane (108) présente une ouverture (502) dont le diamètre est inférieur au diamètre du porte-échantillon de microscopie électronique (104) ; et
un mélange (400) d'un polymère et d'un solvant.

6. Kit selon la revendication 5, dans lequel le mélange (400) comprend entre 20 et 90 % en volume du solvant, de préférence entre 50 et 90 % en volume du solvant.

7. Kit selon la revendication 5 ou la revendication 6, dans lequel le mélange (400) comprend entre 20 et 80 % en volume du polymère, de préférence entre 20 et 50 % en volume du polymère.

8. Kit selon l'une des revendications 5 à 7, dans lequel le mélange (400) comprend au moins l'une des substances suivantes en tant que polymère : un polystyrène, un polyacrylate et un silicone.

9. Kit selon l'une des revendications 5 à 8, dans lequel le mélange (400) comprend du xylol en tant que solvant.

10. Kit selon l'une des revendications 5 à 9, dans lequel le porte-échantillon de microdissection laser (102) comprend un cadre (106) avec une ouverture traversant le cadre (106) et la membrane (108) est disposée dans l'ouverture du cadre (106).

11. Ensemble porte-échantillon (100, 500) pour l'utilisation dans un dispositif de microdissection laser, avec un porte-échantillon de microscopie électronique (104), qui comprend un treillis (110) et une mince couche support (112) pour porter un échantillon (114), l'échantillon étant disposé sur un côté du treillis (110), dans lequel, sur le côté du treillis (110) qui est opposé à la couche support (112), un mélange (400) d'un polymère et d'un solvant est appliqué.

12. Ensemble porte-échantillon (100) selon la revendication 11, comprenant une membrane (108), configurée pour être coupée par un dispositif de microdissection laser, dans lequel le mélange (400) est disposé entre le treillis (110) et la membrane (108).

13. Ensemble porte-échantillon (500) selon la revendication 11, comprenant un porte-échantillon de microdissection laser (102) avec une membrane (108), configurée pour être coupée par un dispositif de microdissection laser ; dans lequel la membrane (108) présente une ouverture dont le diamètre est inférieur au diamètre du porte-échantillon de microscopie électronique (104) ; dans lequel le porte-échantillon de microscopie électronique (104) est disposé sur l'ouverture de la membrane (108) de telle sorte que le mélange (400) soit disposé sur le côté du treillis (110) tourné vers la membrane (108) et que la couche support (112) soit disposée sur le côté du treillis (110) opposé à la membrane (108) ; et dans lequel au moins une partie du solvant s'est évaporée, de sorte que le polymère est durci.
